# EUROPEAN PATENT APPLICATION

(11) **EP 4 350 319 A1**
(43) Date of publication of application: **10.04.2024**
(21) Application number: 22815987.7
(22) Date of filing: 27.05.2022
(51) Int. Cl.: G01M 17/007

(54) **BENCH TEST DEVICE AND BENCH TEST METHOD**

(30) Priority: 04.06.2021 JP 2021094469; 10.03.2022 JP 2022036868
(71) Applicant: HORIBA, Ltd., Kyoto-shi, Kyoto 601-8510 (JP)
(72) Inventor: KAWAZOE, Hiroshi, Kyoto-shi, Kyoto 601-8510 (JP)
(74) Representative: Müller Hoffmann & Partner
(86) International application number: PCT/JP2022/021687
(87) International publication number: WO 2022/255237

(57) **Abstract**

The present invention is to inexpensively configure a bench test device with a steering function for testing a vehicle. A bench test device 100 for testing a test piece W, which is a vehicle or a part thereof, includes a rotating body 21 on which a wheel W1 which is a steering wheel of the test piece W is placed, a support bench 31 which rotatably supports the rotating body 21 along with rotation of the wheel, and a movement mechanism 4 that moves the support bench 31 on an installation surface P using a rotational force of the wheel W1.

## Description

### Technical Field

The present invention relates to a bench test device and a bench test method for testing a test piece that is a vehicle or a part thereof.

### Background Art

In recent years, in order to test a vehicle (hereinafter, an ADAS vehicle) which has an advanced driving support system (ADAS) or an automatic driving vehicle (hereinafter, an AD vehicle), a test of a test piece is performed by, for example, running on a test course simulating an actual road and simulating an external environment of the test piece (i.e., another vehicles, people, or bicycles).

On the other hand, attempts have been made to perform a running test of an ADAS vehicle or an AD vehicle on a bench test device without running on the above test course.

As disclosed in Patent Literature 1, a vehicle-use free roller device that puts a test piece vehicle into a traveling state has been considered as a bench test device. However, in this vehicle-use free roller device, only straight traveling is assumed, and a steering wheel of the test piece cannot be steered. That is, this bench test device cannot perform a running test involving steering of an ADAS vehicle or AD vehicle.

Further, as disclosed in Patent Literature 2, a chassis dynamometer with a steering function has been considered as a bench test device. However, it is necessary to turn rollers on which wheels are placed and an electric dynamometer (dynamometer), and not only does the device become large in scale but cost also increases.

### Citation List

### Patent Literatures

Patent Literature 1: JP 2008-309658 A
Patent Literature 2: JP 2019-203869 A

### Summary of Invention

### Technical Problem

Therefore, the present invention has been made in view of the above-described problems, and a main object thereof is to provide an inexpensive bench test device with a steering function for testing a vehicle such as an ADAS vehicle or an AD vehicle.

### Solution to Problem

That is, a bench test device according to the present invention is a bench test device for testing a test piece that is a vehicle or a part thereof. The bench test device includes a rotating body on which a wheel of the test piece is placed, a support bench that rotatably supports the rotating body, and a movement mechanism that moves the support bench on an installation surface using a rotational force of the wheel.

With such a configuration, because the support bench that rotatably supports the rotating body on which a steered wheel is placed moves using the rotational force of the wheel, it is possible to provide a bench test device with a steering function for performing a running test involving the steering of a vehicle such as an ADAS vehicle or AD vehicle. Here, since the rotating body is rotatably supported by the support bench and the support bench is moved by the movement mechanism, there is no dynamometer and a low-cost configuration is possible.

The steered wheel does not rotate about a touchdown point, but steers and rotates about a steering rotation axis (kingpin axis) of the steering wheel, and the rotating body on which the wheel is placed rotates about an extension of the steering rotation axis (kingpin axis) and the touchdown point (virtual touchdown point) of the ground. The locus of the rotation axis of the steering wheel and a ground plane of the wheel (the present rotating body support bench) varies depending on a camber angle, a caster angle, a scrubbing radius, or the like of the suspension, and a steering mechanism, a suspension mechanism, or the like for each vehicle.

In order to address the movement locus of the support bench which varies for each vehicle, the movement mechanism preferably includes a rolling element provided on the support bench, and the rolling element preferably moves on the installation surface to move the rotating body using the rotational force of the wheel.

With a configuration in which the support bench moves on the installation surface by a rolling element in this manner, it is possible to increase the degree of freedom of movement of the support bench and to address a movement locus of the support bench which varies for each vehicle.

As a specific embodiment, the rotating body is preferably a free roller that rotates by using rotation of the wheel as a power source, or a roller that rotates a tire by applying a rotational force to the rotating body.

In order to give the bench test device a centering function, the bench test device preferably further includes a centering mechanism that biases the support bench toward a centering position.

With this configuration, it is possible to prevent the automatic steering system of an ADAS vehicle or AD vehicle from being determined as abnormal.

As a specific embodiment of the centering mechanism, it is preferable that the centering mechanism include a recess or a protrusion formed on the installation surface, and that the rolling element move along the recess or the protrusion to bias the support bench toward the centering position.

As another specific embodiment of the centering mechanism, it is preferable that the centering mechanism include an elastic body or an actuator which biases the support bench toward the centering position.

In a running test of an ADAS vehicle or AD vehicle, if not only the drive wheel but also the driven wheel is not rotating, an abnormality may be determined and the test cannot be run. The same applies to a case where the rotational speed of the drive wheel is different from the rotational speed of the driven wheel. As such, it is preferable that the rotating body include a drive wheel-side rotating body on which a drive wheel of the test piece is placed and a driven wheel-side rotating body on which a driven wheel of the test piece is placed, and that the bench test device of the present invention further include an interlocking rotation mechanism that rotates the driven wheel-side rotating body in conjunction with the drive wheel-side rotating body.

As a specific embodiment of the interlocking rotation mechanism, it is preferable that the interlocking rotation mechanism mechanically connect the drive wheel-side rotating body and the driven wheel-side rotating body, and transmit rotation of the drive wheel-side rotating body to the driven wheel-side rotating body.

In order to be applicable not only to a running test of a two-wheel drive test piece but also to a running test of a four-wheel drive test piece, it is preferable that the interlocking rotation mechanism include a blocking section that blocks mechanical connection between the drive wheel-side rotating body and the driven wheel-side rotating body.

As another specific embodiment of the interlocking rotation mechanism, it is preferable that the interlocking rotation mechanism include a motor that rotates the driven wheel-side rotating body or the driven wheel, and that the motor rotate the driven wheel-side rotating body in conjunction with the drive wheel-side rotating body or rotate the driven wheel in conjunction with the drive wheel.

In a case where a running test involving steering of a vehicle such as an ADAS vehicle or AD vehicle is performed, if and inner and outer wheel speed difference is not occurring due to an inner wheel difference during steering, there is a concern that stability control of a skid prevention function (ESC, VDC, or the like) of the vehicle will be activated and the ADAS or AD will stop or not normally operate.

In order to suitably solve this problem, it is preferable that the rotating body be a pair of front wheel-side rotating bodies on which front left and right wheels are respectively placed, that the front left and right wheels be steering wheels of the test piece, and that the bench test device further include a pair of front wheel-side motors that respectively rotate the pair of front wheel-side rotating bodies or respectively rotate the front left and right wheels, and a pair of rear wheel-side motors that respectively rotate a pair of rear wheel-side rotating bodies on which rear left and right wheels of the test piece are respectively placed or respectively rotate the rear left and right wheels. With this configuration, the speed of the four wheels of the front left and right wheels and the rear right and left wheels can be individually controlled.

Specifically, it is preferable that the bench test device of the present invention further include a turning angle calculator that calculates a turning angle of the front left and right wheels, a turning radius calculator that calculates a turning radius of each wheel by the turning angle, a speed difference calculator that calculates a speed difference of each wheel, and a motor controller that controls the pair of front wheel-side motors and the pair of rear wheel-side motors based on the speed difference of each wheel.

With this configuration, because the inner and outer wheel speed difference due to the inner wheel difference during steering can be given to the vehicle, a running test of the vehicle can be performed without activating the stability control of the skid prevention function (ESC, VDC, or the like) of the vehicle.

Further, a bench test device according to the present invention is a bench test device for testing a test piece that is a vehicle or a part thereof. The bench test device includes a fixing mechanism that fixes the test piece in a state of floating from a road surface, a pair of front wheel-side motors that rotate respective rotation axes of front left and right wheels of the test piece via a front-side rotating shaft, a pair of rear wheel-side motors that rotate respective rotation axes of rear right and left wheels of the test piece via a rear-side rotating shaft, a turning angle calculator that calculates a turning angle of the front left and right wheels, a turning radius calculator that calculates a turning radius of each wheel based on the turning angle, a speed difference calculator that calculates a speed difference of each of the wheels, and a motor controller that controls the pair of front wheel-side motors and the pair of rear wheel-side motors based on the speed difference of each wheel.

With this bench test device, because an inner and outer wheel speed difference due to an inner wheel difference during steering can be given to the vehicle, a running test of the vehicle can be performed without activating the stability control of a skid prevention function (ESC, VDC, or the like) of the vehicle.

In order to evaluate the steering function of the test piece, the bench test device of the present invention preferably includes a steering reaction force input device that inputs a steering reaction force to a steering rack gear of the test piece.

In this configuration, when the wheels rotate at a high speed at a large steering angle, there is concern that constant speed joints connecting the motors and the wheels may be damaged. In addition, the steering reaction force is directly applied in the lateral direction of the vehicle body, and there is a possibility that the position of the vehicle fixing pedestal (fixing mechanism) is shifted and the test cannot be normally performed, or there is a possibility that the vehicle fixing pedestal (fixing mechanism) is damaged.

In order to solve these problems, the bench test device preferably further includes a detector that detects that the steering angle of the steering of the test piece has reached a predetermined steering threshold value, and a control stopping section that stops rotation control of the wheels or steering reaction force control of the steering reaction force input device when the steering angle has reached the steering threshold value.

The detector preferably includes a contact sensor that comes into contact with a steering rack gear or an interlocking member interlocked with the steering rack gear in a state where the steering angle has reached the steering threshold, and a support member that supports the contact sensor. When the steering angle has exceeded the steering threshold value, the support member slides or falls off according to the steering angle.

Further, a bench test device according to the present invention is a bench test device for testing a test piece that is a vehicle or a part thereof. The bench test device includes a fixing mechanism that fixes the test piece to a road surface, a pair of front wheel-side motors connected to rotation axes of respective front left and right wheels of the test piece via a front-side rotating shaft, a pair of rear wheel-side motors connected to rotation axes of respective rear left and right wheels of the test piece via a rear-side rotating shaft, a turning angle calculator that calculates a turning angle of the front left and right wheels, a turning radius calculator that calculates a turning radius of each wheel based on the turning angle, a speed difference calculator that calculates a speed difference of each wheel, and a motor controller that controls the pair of front wheel-side motors or the pair of rear wheel-side motors based on the speed difference of each wheel.

With this bench test device, because an inner and outer wheel speed difference due to an inner wheel difference during steering can be given to the vehicle, a running test of the vehicle can be performed without activating the stability control of a skid prevention function (ESC, VDC, or the like) of the vehicle.

Further, in the above bench test device, in order to perform various running tests by statically or dynamically controlling the posture of the test piece, the fixing mechanism is preferably capable of adjusting the posture of the test piece with respect to a road surface, or is dynamically operable to dynamically change the posture of the test piece with respect to the road surface.

In addition, one aspect of the present invention is also a bench test method for a test piece that is an ADAS vehicle, an AD vehicle, or part thereof using the above bench test device. For example, it is conceivable to evaluate lane keeping, overtaking, lane changing, or emergency avoidance steering by changing a surrounding environment of a test piece, which is a vehicle or a part thereof, while setting the test piece in a traveling state on the above bench test device. Advantageous Effects of Invention

According to the present invention described above, it is possible to inexpensively configure a bench test device with a steering function for testing a vehicle such as an ADAS vehicle or AD vehicle.

### Brief Description of Drawings

FIG. 1 is a schematic diagram illustrating a scenario of a bench test method using a bench test device according to an embodiment of the present invention.
FIG. 2 is an overall schematic diagram of the bench test device according to the embodiment.
FIG. 3 is a schematic diagram illustrating a first configuration example of an interlocking rotation mechanism of the embodiment.
FIG. 4 is a schematic diagram illustrating a second configuration example of the interlocking rotation mechanism of the embodiment.
FIG. 5 is a schematic diagram illustrating a third configuration example of the interlocking rotation mechanism of the embodiment.
FIG. 6(a) is a side view and FIG. 6(b) is a plan view schematically illustrating configurations of a rotating body, a support bench, and a movement mechanism of the embodiment.
FIG. 7(a) is a side view and FIG. 7(b) is a plan view schematically illustrating a configuration of a centering mechanism (recess or protrusion) of the embodiment.
FIG. 8(a) is a side view and FIG. 8(b) is a plan view schematically illustrating a configuration of a centering mechanism (elastic body) of the embodiment.
FIG. 9 is a plan view schematically illustrating a configuration of a centering mechanism (steering reaction force input device) of the embodiment.
FIG. 10 is a schematic diagram illustrating a configuration in which wheels are connected to a support bench via a free wheel hub of a variation of the embodiment.
FIG. 11 is a schematic diagram illustrating (a) a vehicle height adjustment mechanism and (b) a tread width adjustment mechanism of a variation of the embodiment.
FIG. 12(a) is a front view schematically illustrating a configuration of a centering mechanism (steering reaction force input device) of a variation of the embodiment.
FIG. 13 is a schematic diagram illustrating a configuration of a bench test device of a variation of the embodiment.
FIG. 14 is a schematic diagram illustrating a configuration of a bench test device of a variation of the embodiment.
FIG. 15 is a schematic diagram illustrating a configuration of a bench test device of a variation of the embodiment.
FIG. 16 is a diagram illustrating a radius of gyration of each wheel by geometric calculation at an extremely low speed.
FIG. 17 is a schematic diagram illustrating a configuration of a bench test device of a variation of the embodiment.
FIG. 18 is a schematic diagram illustrating a main section of a bench test device of a variation of the embodiment.
FIG. 19 is a schematic diagram illustrating a configuration of a detector of a variation of the embodiment.

### Description of Embodiments

The following describes an embodiment of a bench test device according to the present invention with reference to the accompanying drawings. Note that any of the drawings illustrated below may be schematically simplified or exaggerated as appropriate to facilitate understanding. The same constituent elements are denoted by the same reference signs, and description thereof is omitted as appropriate.

A bench test device 100 of the present embodiment is used to test a test piece W. The test piece W is an item such as a vehicle (hereinafter, an ADAS vehicle) with an advanced driving assistance system (ADAS), an automatic driving vehicle (hereinafter, an AD vehicle), or a part thereof. In the present embodiment, a complete ADAS vehicle or AD vehicle is assumed as the test piece W. However, the test piece W may be an incomplete vehicle (a part of an ADAS vehicle or AD vehicle) that is not a complete vehicle as long as it can travel.

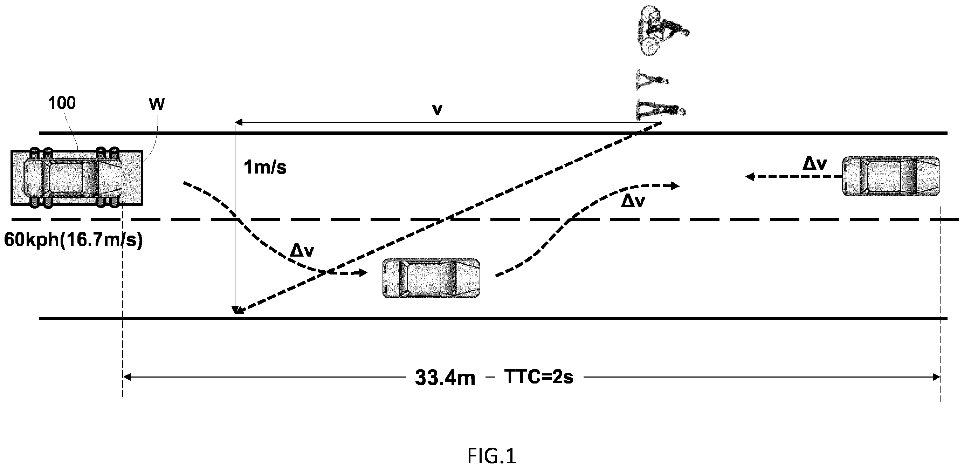

FIG. 1 illustrates an example of a scenario of at bench test method using the bench test device 100 of the present embodiment. Here, a method of evaluating the behavior (i.e., lane keeping, overtaking, lane changing, emergency avoidance steering, or the like) of the test piece W is considered. In this method, the test piece W in a traveling state on the bench test device 100 and the surrounding environment such as the front, rear, side, or the like of the test piece W is changed or a pseudo signal is input to a sensor of the test piece W.

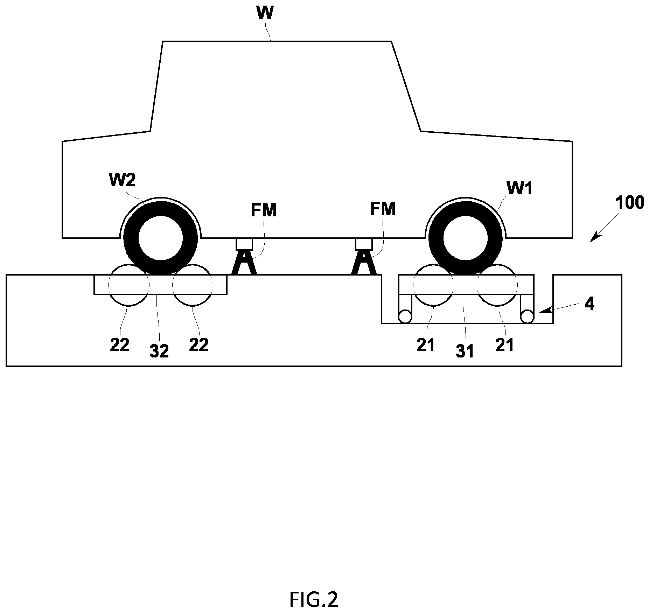

Specifically, as illustrated in FIG. 2, the bench test device 100 of the present embodiment includes drive wheel-side rotating bodies 21 on which a pair of left and right drive wheels W1 of the test piece W is placed, and driven wheel-side rotating bodies 22 on which a pair of left and right driven wheels (non-drive wheels) W2 of the test piece W is placed. In the bench test device 100, the test piece W is fixed by a fixing mechanism FM such that the drive wheels W1 and the driven wheels W2 are not detached from the drive wheel-side rotating bodies 21 and the driven wheel-side rotating bodies 22, respectively. Further, the wheels (drive wheels W1 and driven wheels W2) of the present embodiment are in a state where tires are mounted on wheel rims.

The drive wheel-side rotating bodies 21 are provided for each of the pair of left and right drive wheels W1. Two drive wheel-side rotating bodies 21 are provided for each drive wheel W1, and one drive wheel W1 is mounted on two drive wheel-side rotating bodies 21. The drive wheel-side rotating bodies 21 are rotatably supported by a support bench 31 along with the rotation of the drive wheels W1. The drive wheel-side rotating bodies 21 are free rollers that freely rotate, and rotate using the rotation of the drive wheels W1 as a power source.

The driven wheel-side rotating bodies 22 are provided for each of the pair of left and right driven wheels W2. Two driven wheel-side rotating bodies 22 are provided for each driven wheel W2, and one driven wheel W2 is mounted on two driven wheel-side rotating bodies 22. The driven wheel-side rotating bodies 22 are rotatably supported by a support bench 32. The driven wheel-side rotating bodies 22 are free rollers that freely rotate, and rotate according to a later-described interlocking rotation mechanism 5.

interlocking Rotation Mechanism 5>

The bench test device 100 of the present embodiment further includes an interlocking rotation mechanism 5 that rotates the driven wheel-side rotating bodies 22 in conjunction with the drive wheel-side rotating bodies 21 so as to have a constant speed, for example.

### <First Configuration Example of Interlocking Rotation Mechanism 5>

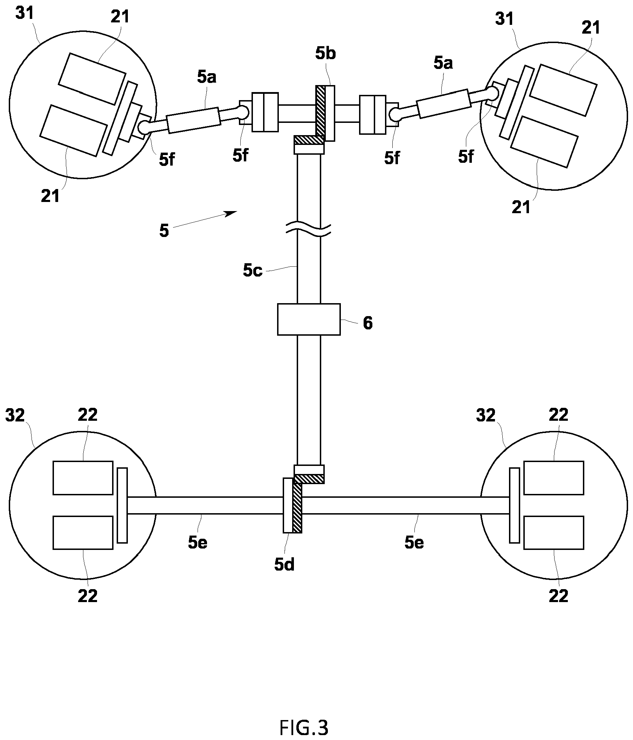

As illustrated in FIG. 3, the interlocking rotation mechanism 5 mechanically connects the drive wheel-side rotating bodies 21 and the driven wheel-side rotating bodies 22, and mechanically transmits the rotation of the drive wheel-side rotating bodies 21 to the driven wheel-side rotating bodies 22 at a constant speed. Specifically, the interlocking rotation mechanism 5 includes drive wheel-side rotating shafts 5a that are connected to the drive wheel-side rotating bodies 21 and rotate, a propeller shaft 5c connected to the rotating shafts 5a via a bevel gear 5b, and a driven wheel-side rotating shaft 5e connected to the propeller shaft 5c via a bevel gear 5d and connected to the driven wheel-side rotating bodies 22.

In the present embodiment, since the drive wheels W1 are steering wheels, the drive wheel-side rotating shafts 5a are provided with joints 5f with a floating function for following the steering movement of the drive wheels W1 and transmitting rotation from the drive wheels W1. Examples of a joint 5f include a constant speed joint and a universal joint. The drive wheel-side rotating shafts 5a use expanding and contracting structures such as spline structures to follow the steering movement of the drive wheels W1. Through such a configuration, the rotational frequency of the drive wheel-side rotating bodies 21 and the rotational frequency of the driven wheel-side rotating bodies 22 are the same.

The interlocking rotation mechanism 5 may include a blocking section 6 that blocks mechanical connection between the drive wheel-side rotating bodies 21 and the driven wheel-side rotating bodies 22. The blocking section 6 is provided on the propeller shaft 53, and uses a clutch mechanism that switches the drive wheel-side rotating bodies 21 and the driven wheel-side rotating bodies 22 between a connected state and a blocked state. A four-wheel drive test piece W can be bench-tested by placing the drive wheel-side rotating bodies 21 and the driven wheel-side rotating bodies 22 in a blocked state through the blocking section 6. Switching between a connected state and a disconnected state through the clutch mechanism may be manually performed or may be controlled by an unillustrated controller.

### <Second Configuration Example of Interlocking Rotation Mechanism 5>

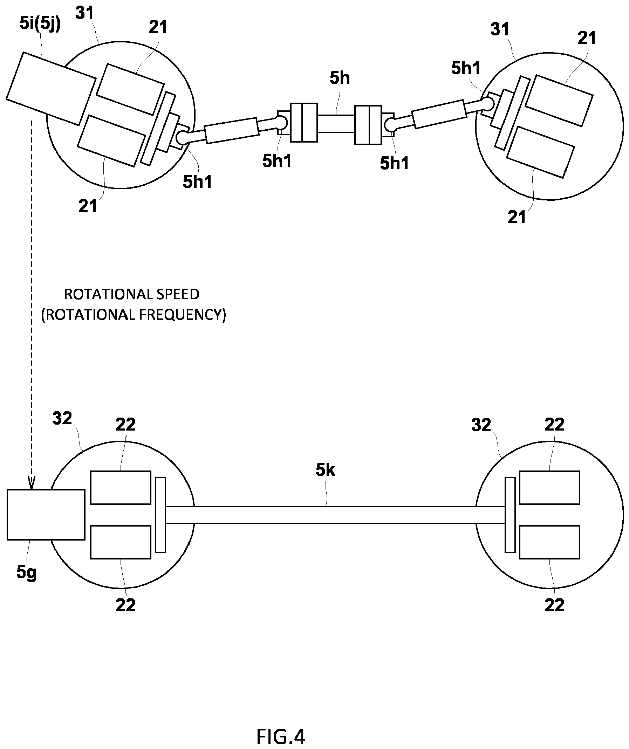

Furthermore, as illustrated in FIG. 4, an interlocking rotation mechanism 5 includes a motor 5g that rotates the driven wheel-side rotating bodies 22, and the motor 5g rotates the driven wheel-side rotating bodies 22 so as to have a constant speed with the drive wheel-side rotating bodies 21. In FIG. 4, the left and right pairs of drive wheel-side rotating bodies 21 are connected by a drive wheel-side link mechanism 5h, and one drive wheel-side rotating body 21 is provided with a rotational speed sensor 5i. Here, a motor 5j is connected to the drive wheel-side rotating body 21, and an encoder of the motor 5j is used as the rotational speed sensor 5i. The left and right pairs of driven wheel-side rotating bodies 22 are connected by a driven wheel-side link mechanism 5k, and the motor 5g is connected to one of the driven wheel-side rotating bodies 22. The motor 5g can be controlled by an unillustrated controller.

The drive wheel-side link mechanism 5h is provided with joints 5h1 with a floating function for following the steering movement of the drive wheels W1 and transmitting rotation from the drive wheels W1. Examples of a joint 5h1 include a constant speed joint and a universal joint. The drive wheel-side link mechanism 5h is provided with an expanding and contracting structure such as a spline structure to follow the steering movement of the drive wheel W1. Then, by rotating the motor 5g connected to a driven wheel-side rotating body 22 at a rotational speed (rotational frequency) obtained by the rotational speed sensor 5i, the driven wheel-side rotating bodies 22 rotate at the same speed as the drive wheel-side rotating bodies 21. A four-wheel drive test piece W can be bench-tested by allowing the motor 5g connected to a driven wheel-side rotating body 22 to rotate freely.

### <Third Configuration Example of Interlocking Rotation Mechanism 5>

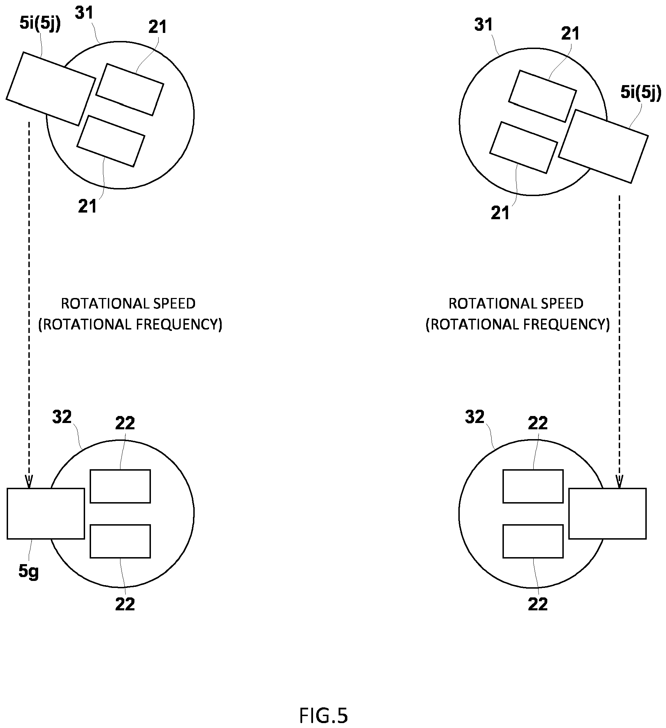

In addition, in an interlocking rotation mechanism 5 as illustrated in FIG. 5, a rotational speed sensor 5i (an encoder of a motor 5j may be used) may be provided in each drive wheel-side rotating body 21, and a motor 5g may be connected to each driven wheel-side rotating body 22. In addition to the configuration in which the driven wheel-side rotating bodies 22 are rotated by motors 5g, a configuration in which motors 5g are connected to the driven wheels W2 to directly rotate the driven wheels W2 may be adopted. A four-wheel drive test piece W can be bench-tested by allowing the motor 5g connected to a driven wheel-side rotating body 22 to rotate freely. The motor 5g can be controlled by an unillustrated controller.

### <Movement Mechanism 4 of Drive Wheel-Side Support Bench 31>

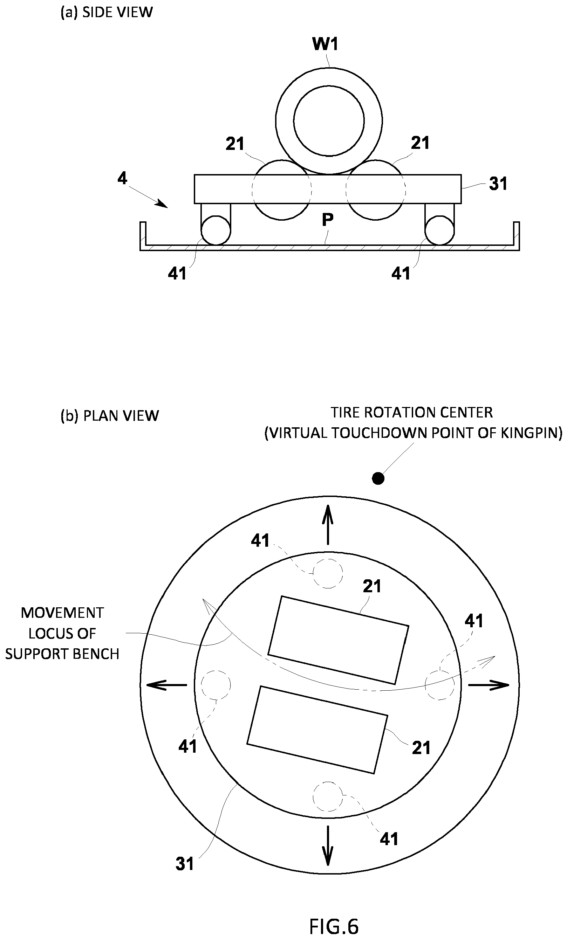

As illustrated in FIGS. 2 and 6, the bench test device 100 of the present embodiment includes a movement mechanism 4 which moves a support bench that rotatably supports rotating bodies on which steering wheels are placed, using a rotational force generated based on steering of the steered wheels. In the present embodiment, an example is illustrated in which a drive wheel W1 serves as a steering wheel, and the movement mechanism 4 moves the support bench 31 (hereinafter, drive wheel-side support bench 31) that rotatably supports the drive wheel-side rotating bodies 21, using the rotational force generated based on the steering of the drive wheel W1. The movement mechanism 4 may use at least a part of the rotational force of the drive wheel W1, and the movement may be assisted by another unillustrated movement assisting mechanism.

Specifically, the movement mechanism 4 moves the drive wheel-side support bench 31 according to the steering angle of the steered drive wheel W1, includes rolling elements 41 provided on the support bench 31, and is configured such that the rolling elements 41 move on an installation surface P on which the support bench 31 is installed. The movement mechanism 4 enables the drive wheel-side support bench 31 to move with a free locus. Here, the movement locus of the drive wheel-side support bench 31 accompanying the steering moves about a virtual touchdown point where a kingpin (a pin serving as a center of steering rotation of the steering wheels) is extended as a rotation center (refer to FIG. 6(b)).

### <Centering Mechanism 7>

The bench test device 100 of the present embodiment further includes a centering mechanism 7 that biases the drive wheel-side support bench 31 toward a centering position. Here, the centering position is a position of the drive wheel-side support bench 31 corresponding to the drive wheel W1 in a state where steering is not performed (straight traveling state).

Specific examples of the centering mechanism 7 under consideration include the following.

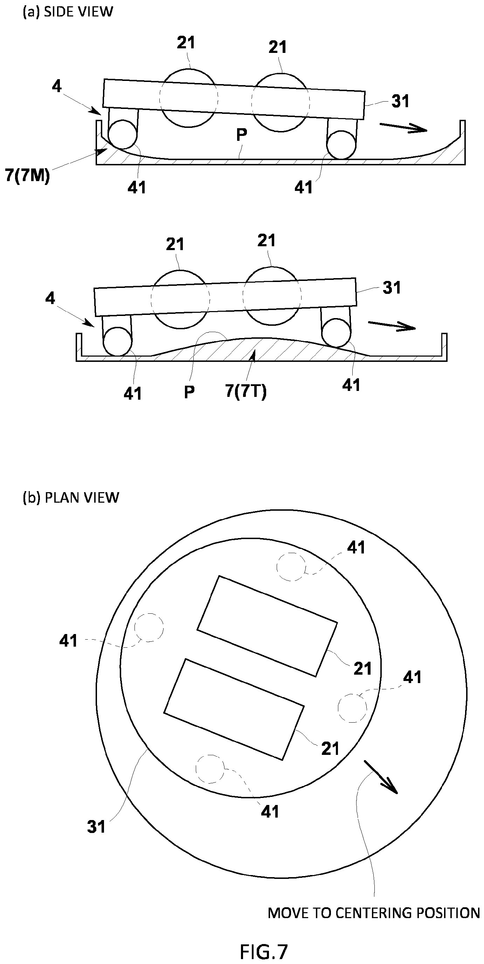

As illustrated in FIG. 7, it is conceivable that the centering mechanism 7 includes a recess 7M or a protrusion 7T formed on the installation surface P, and the rolling elements 41 move along the recess 7M or the protrusion 7T to bias the drive wheel-side support bench 31 toward the centering position.

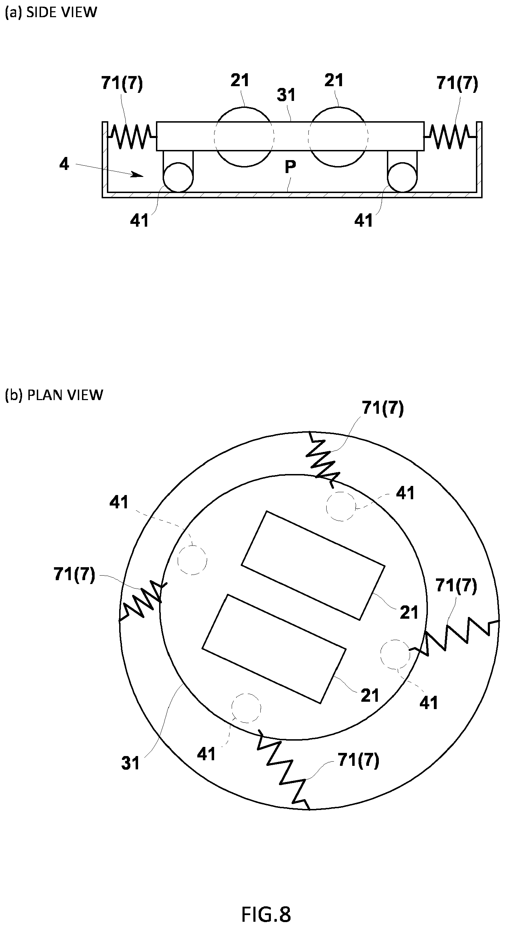

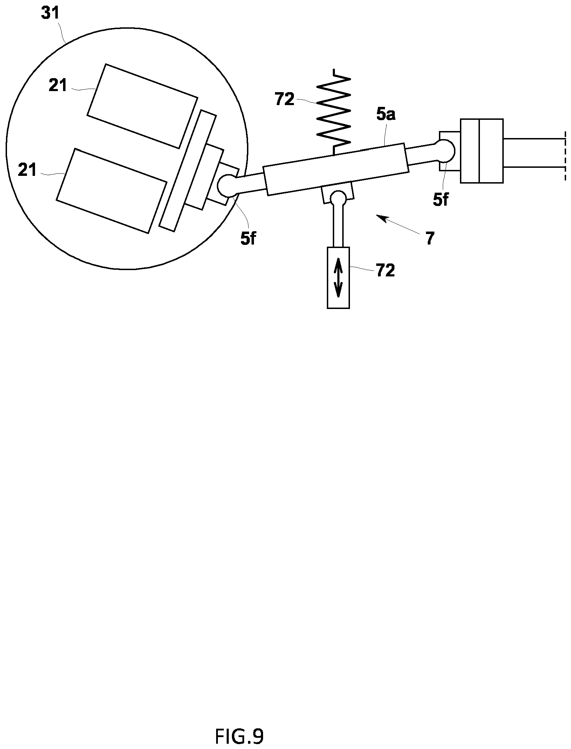

As illustrated in FIG. 8, it is conceivable that the centering mechanism 7 is configured using an elastic body 71 that biases the drive wheel-side support bench 31 toward the centering position. In this configuration, it is conceivable that the drive wheel-side support bench 31 is biased from the outside to the centering position by a plurality of elastic bodies 71. In addition, as illustrated in FIG. 9, it is conceivable that the centering mechanism 7 is configured to connect a steering reaction force input device 72 that applies a steering reaction force to the drive wheel-side rotating shaft 5a of the interlocking rotation mechanism 5 to bias the drive wheel-side support bench 31 toward the centering position. As the steering reaction force input device 72, a device using an actuator such as a cylinder or a motor, a device using an elastic body, or a combination thereof may be considered.

### <Effects of Present Embodiment>

According to the bench test device 100 of the present embodiment configured as described above, because the drive wheel-side support bench 31 that rotatably supports the drive wheel-side rotating bodies 21 on which the steered wheel (drive wheel W1) is placed move using the rotational force generated based on the steering of the drive wheel W1, it is possible to provide a bench test device 100 with a steering function for performing a running test involving the steering of an ADAS vehicle or AD vehicle. Here, since the drive wheel-side rotating bodies 21 are rotatably supported by the drive wheel-side support bench 31 and the drive wheel-side support bench 31 is moved by the movement mechanism 4, a dynamometer is not included and a low-cost configuration is possible.

### <Other Embodiments>

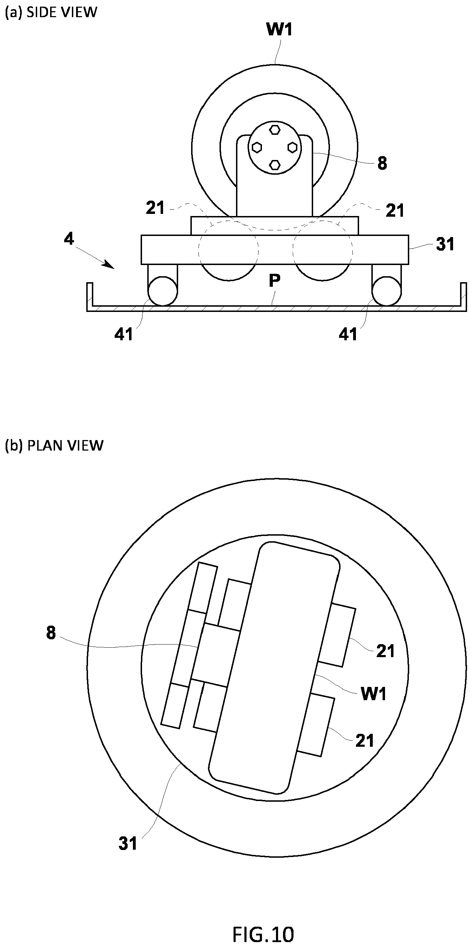

For example, as illustrated in FIG. 10, the drive wheel W1, which is a steering wheel, may be connected to the drive wheel-side support bench 31 via a free hub 8. With this configuration, when the drive wheel W1 is steered, the drive wheel-side support bench 31 can be stably moved with respect to the drive wheel W1 without deviation.

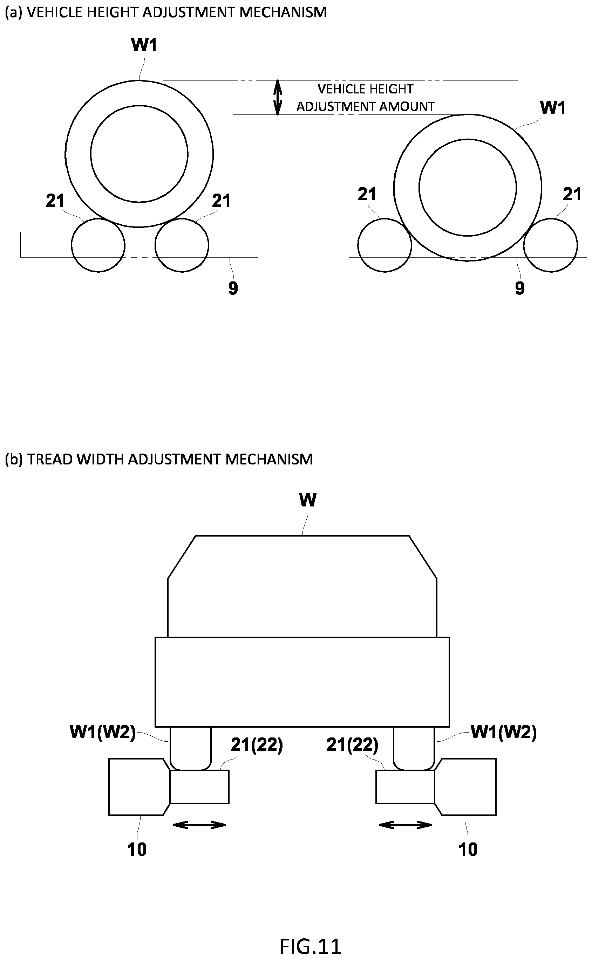

The bench test device 100 of the above embodiment may include a vehicle height adjustment mechanism 9. As illustrated in FIG. 11(a), it is conceivable that this vehicle height adjustment mechanism 9 adjusts a vehicle height position by adjusting the interval between two rotating bodies 21 (22) (two rotating bodies 21 (22) sandwiching a wheel W1 or W2) provided corresponding to each wheel W1 (W2). By widening the interval between the two rotating bodies 21 (22) sandwiching the wheel W1 (W2), the vehicle height can be reduced. This vehicle height adjustment mechanism 9 can make the vehicle height equivalent to that in a case of traveling on an actual road, and improve the reliability of the vehicle test.

The bench test device 100 of the above embodiment may further include a tread width adjustment mechanism 10. As illustrated in FIG. 11(b), this tread width adjustment mechanism 10 adjusts the interval between left and right pairs of drive wheel-side rotating bodies 21 and the interval between left and right pairs of driven wheel-side rotating bodies 22. The tread width adjustment mechanism 10 can adjust the tread width to one suitable according to vehicle type.

In addition, a function of rotating the drive wheel-side rotating bodies 21 may be imparted to the drive wheel-side support bench 31 of the above embodiment. Specifically, the drive wheel-side support bench 31 may be a rotary table.

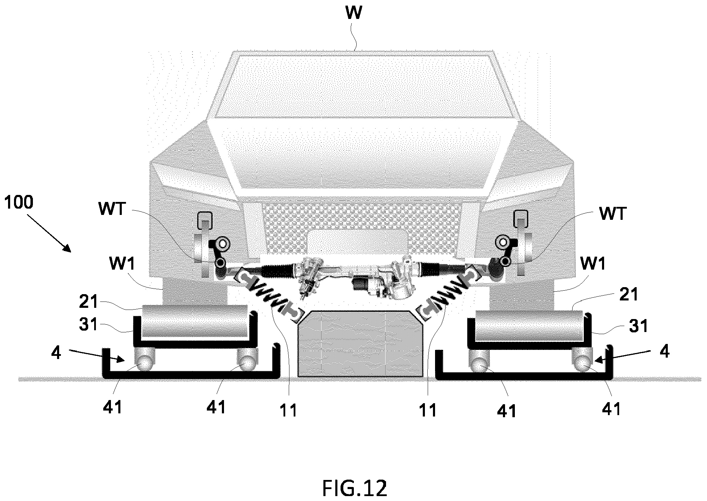

Additionally, other than the configuration in which a force is applied to the drive wheel-side support bench 31 or the drive wheel-side shaft 5a to bias the drive wheel-side support bench 31 toward the centering position, the centering mechanism 7 may be configured as a steering reaction force input device 11. As illustrated in FIG. 12, the steering reaction force input device 11 is connected to a tie rod WT of the test piece W to generate a steering reaction force (centering force) in the tie rod WT. A device using an actuator such as a cylinder or a motor, a device using an elastic body, or a combination thereof may be considered as the steering reaction force input device 11.

The bench test device 100 of the above embodiment has a configuration using rotating bodies 21 and 22 on which wheels W1 and W2 are placed, but the object of the present invention can also be achieved by the following configuration in which the bench test device 100 is connected to wheel rims WH of the wheels W1 and W2.

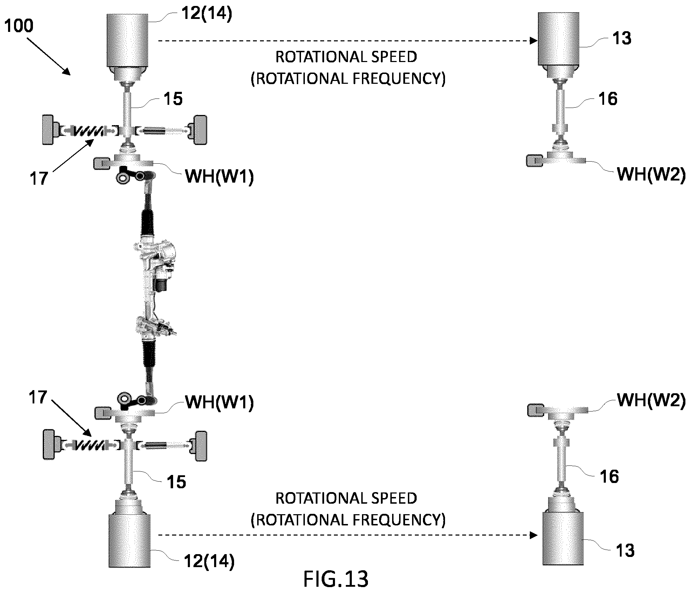

That is, as illustrated in FIG. 13, the bench test device 100 may be configured such that rotational speed sensors 12 are connected to the wheel rims WH of the drive wheels W1, motors 13 are connected to the wheel rims WH of the driven wheels W2, and the wheel rims WH of the driven wheels W2 are rotated by the motors 13 based on a rotational speed obtained by the rotational speed sensors 12. In a rotational speed sensor 12, a motor 14 is connected to the wheel rim WH of the drive wheel W1, and the encoder of the motor 14 can be used as the rotational speed sensor 12. In a case where the motor 14 is connected to the wheel rim WH of a drive wheel W1 which is a steering wheel, an expanding and contracting structure 15 with a spline function or the like can be used to follow the steering movement of the drive wheel W 1 and to transmit the rotation from the drive wheel W1. The expanding and contracting structure 15 includes a j oint with a floating function such as a constant velocity j oint or a universal joint. An expanding and contracting structure 16 such as a spline structure can also be used when a motor 13 is connected to the wheel rim WH of a driven wheel W2. In this manner, the tread width can be adjusted by using the expanding and contracting structures 15 and 16 for connecting the motors 13 and 14. In addition, steering reaction force input devices 17 may be connected to the expanding and contracting structures 15 connected to the wheel rims WH of the drive wheels W1, which are steering wheels, to generate steering reaction force (centering force). A four-wheel drive test piece W can be bench-tested by allowing the motors 13 connected to the wheel rims WH of the driven wheels W2 to rotate freely.

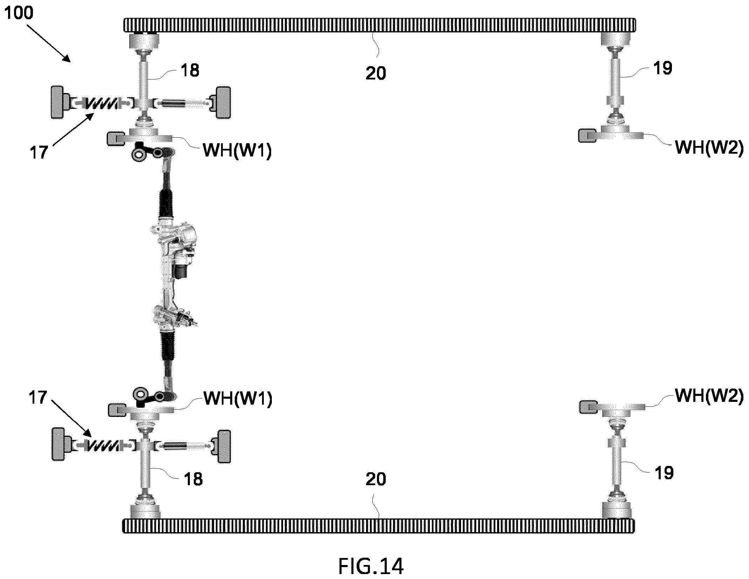

As illustrated in FIG. 14, the wheel rims WH of the drive wheels W1 and the wheel rims WH of the driven wheels W2 may be mechanically connected to mechanically transmit the rotation of the wheel rims WH of the drive wheels W1 to the wheel rims WH of the driven wheels W2. Specifically, a configuration including drive wheel-side rotating shafts 18 connected to the wheel rims WH of the drive wheels W1, driven wheel-side rotating shafts 19 connected to the wheel rims WH of the driven wheels W2, and transmission members 20 such as a belt or a chain bridged between the shafts 18 and 19 is conceivable. In a rotating shaft 18 connected to a wheel rim WH of a drive wheel W1 which is a steering wheel, an expanding and contracting structure 15 with a spline function or the like can be used to follow the steering movement of the drive wheel W1 and to transmit the rotation from the drive wheel W1. The expanding and contracting structure 15 includes a joint with a floating function such as a constant velocity joint or a universal joint. An expanding and contracting structure such as a spline structure can also be used when a rotating shaft 19 is connected to a wheel rim WH of a driven wheel W2. In this manner, the tread width can be adjusted by using the expanding and contracting structures in the rotating shafts 18 and 19. A four-wheel drive test piece W can be bench-tested by releasing the connection between the driven wheel-side rotating shafts 18 and the drive wheel-side rotating shafts 19 though the transmission members 20.

In a case where a running test involving steering of a vehicle such as an ADAS vehicle or AD vehicle is performed, if and inner and outer wheel speed difference is not occurring due to an inner wheel difference during steering, there is a concern that stability control of a skid prevention function (ESC, VDC, or the like) of the vehicle will be activated and the ADAS or AD will stop or not normally operate.

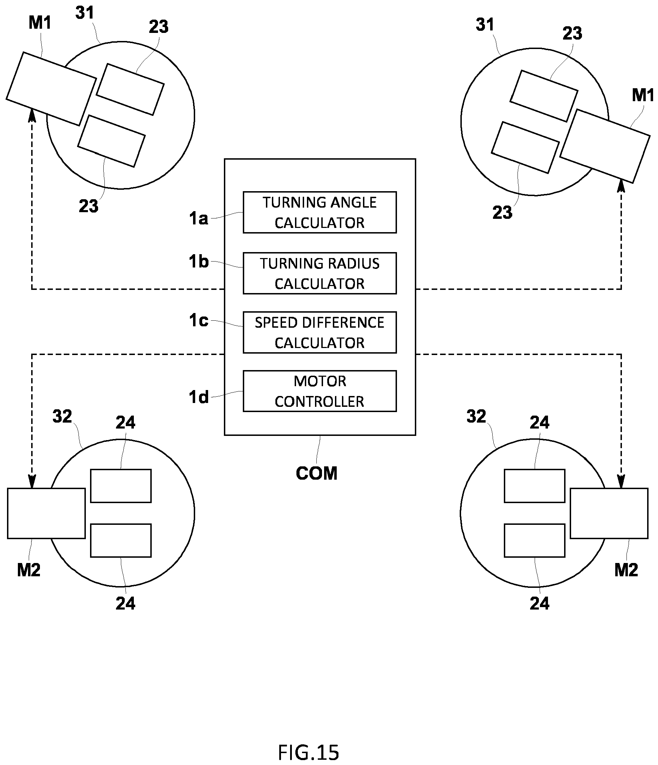

In order to suitably solve this problem, as illustrated in FIG. 15, pairs of front wheel-side rotating bodies 23, pairs of rear wheel-side rotating bodies 24, a pair of front wheel-side motors M1, a pair of rear wheel-side motors M2, and a control device COM are included. The front left and right wheels W1, which are steering wheels of the test piece W, are respectively placed on the pairs of front wheel-side rotating bodies 23. The rear left and right wheels are respectively placed on the pairs of rear wheel-side rotating bodies 24. The front wheel-side motors M1 respectively rotate the pairs of front wheel-side rotating bodies 23. The rear wheel-side motors M2 respectively rotate the pairs of rear wheel-side rotating bodies 24. The control device COM controls the front wheel-side motors M1 and the rear wheel-side motors M2. The pair of front wheel-side motors M1 may be respectively connected to the front left and right wheels W1 via an expanding and contracting structure such as a spline function having a joint with a floating function such as a constant velocity joint or a universal joint, and the pair of rear wheel-side motors M2 may be respectively connected to the rear left and right wheels W2 via a joint with a floating function such as a constant velocity joint or a universal joint.

In this configuration, the control device COM individually controls the speeds of the four wheels of the front left and right wheels W1 and the rear left and right wheels W2. Note that the control device COM is a dedicated or general-purpose computer including a CPU, memory, an input/output interface, an AD converter, and the like.

Specifically, the control device COM manifests functions as a turning angle calculator 1a that calculates the turning angle of the front left and right wheels W1, a turning radius calculator 1b that calculates the turning radius of each wheel due to the turning angle, a speed difference calculator 1c that calculates the speed difference of each wheel, and a speed controller 1d that controls the speed of the pair of front wheel-side motors M1 and/or the pair of rear wheel-side motors M2 based on the speed difference of each wheel.

The turning angle calculator 1a calculates the turning angle of a front wheel rim with respect to a steering wheel steering angle (amount of lateral movement of a steering rack gear) from steering geometry (design value) such as the Ackerman mechanism, for example. The turning angle calculator 1a may be replaced with a configuration in which a turning angle in an actual steering wheel steering angle is obtained by a measurement device such as a vehicle basic characteristic measurement device (K&C tester).

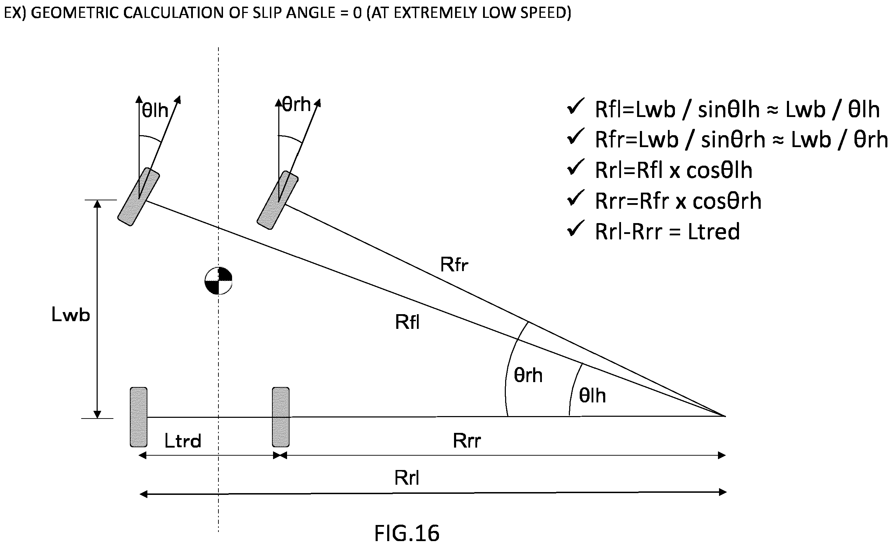

The turning radius calculator 1b calculates the turning radius of each wheel from the turning angle. For example, in the case of an extremely low speed (tire slip angle = 0), the turning radius calculator 1b calculates the turning radius of each wheel by geometric calculation as illustrated in FIG. 16. In addition, the turning radius calculator 1b can also calculate the turning radius of each wheel through a four-wheel turning model in consideration of the slip angle, such as during steady circular turning.

For example, as illustrated in FIG. 16, the turning radius of each wheel at a very low speed is as follows.
Turning radius of front left wheel; R_{fl} = L_{wb}/sinθₗₕ ≈ L_{wb}/θₗₕ
Turning radius of front right wheel; R_{fr} = L_{wb}/sinθᵣₕ ≈ L_{wb}/θᵣₕ
Turning radius of rear left wheel; Rfₗ = Rfₗ × cosθₗₕ
Turning radius of rear right wheel; R_{fr} = R_{fr} × cosθᵣₕ

The speed difference calculator 1c calculates the speed difference of each wheel. Because the vehicle turning speed (rotational speed) ω is ω = dθ/dt and the wheel turning speed v is v = ω × R, the speed difference calculator 1c obtains the turning speed of each wheel as follows.
Turning speed of front left wheel; v_{fl} = ω × R_{fl}
Turning speed of front right wheel; v_{fr} = ω × R_{fr}
Turning speed of rear left wheel; vᵣₗ = ω × Rᵣₗ
Turning speed of rear right wheel; vᵣᵣ = ω × Rᵣᵣ

From the above, the relationship of v_{fl} : v_{fr} : vᵣₗ : vᵣᵣ = R_{fl} : R_{fr} : Rᵣₗ : Rᵣᵣ is established.

The speed controller 1d controls the pair of front wheel-side motors M1 and the pair of rear wheel-side motors M2 based on the speed difference of each wheel, and calculates each wheel speed as shown in the following equation using v = (vᵣₗ + vᵣᵣ)/2 and the relationship of v_{fl} : v_{fr} : vᵣₗ : vᵣᵣ = R_{fl} : R_{fr} : Rᵣₗ : Rᵣᵣ.
Wheel speed of front left wheel; v_{fl} = v × R_{fl}/(R_{fl} + R_{fr} + Rᵣₗ + Rᵣᵣ)
Wheel speed of front right wheel; v_{fr} = v × R_{fr}/(R_{fl} + R_{fr} + Rᵣₗ + Rᵣᵣ)
Wheel speed of rear left wheel; vᵣₗ = v × Rᵣₗ/(R_{fl} + R_{fr} + Rᵣₗ + Rᵣᵣ)
Wheel speed of rear right wheel; vᵣᵣ = v × Rᵣᵣ/(R_{fl} + R_{fr} + Rᵣₗ + Rᵣᵣ)

The speed controller 1d individually controls each of the pair of front wheel-side motors M1 and the pair of rear wheel-side motors M2 using the wheel speeds obtained as described above so that the front left and right wheels W1 and the rear left and right wheels W2 have the wheel speeds obtained as described above. Here, a motor connected to a drive wheel sets the wheel speed of the drive wheel to the value obtained above while applying a load to the drive wheel, and a motor connected to a driven wheel sets the wheel speed of the driven wheel to the value obtained above.

With this configuration, because the inner and outer wheel speed difference due to the inner wheel difference during steering can be given to the vehicle, a running test of the vehicle can be performed without activating the stability control of the skid prevention function (ESC, VDC, or the like) of the vehicle.

Further, the bench test device 100 of the above embodiment has a configuration which uses the front wheel-side rotating bodies 23 on which the front left and right wheels W1 are placed and the rear wheel-side rotating bodies 24 on which the rear left and right wheels W2 are placed, but be configured as follows to be connected to the wheel rims WH of the front left and right wheels W1 and the rear left and right wheels W2, or connected to the rotation axes of the front left and right wheels W1 and the rear left and right wheels W2.

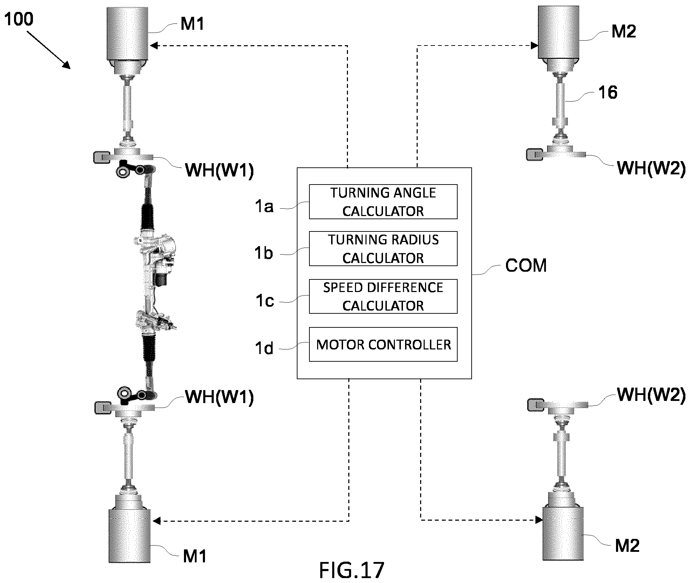

That is, as illustrated in FIG. 17, the bench test device 100 may be configured such that front wheel-side motors M1 are connected to the wheel rims WH or rotation axes of the front left and right wheels W1 via rotating shafts (front-side rotating shafts), and rear wheel-side motors M2 are connected to the wheel rims WH or rotation axes of the rear left and right wheels W2 via rotating shafts (rear-side rotating shaft). Here, the rotating shafts connected to the wheel rims WH or rotation axes of the front left and right wheels W1 can use expanding and contracting structures such as a spline function. An expanding and contracting structure has a joint with a floating function such as a constant velocity joint or a universal joint. The rotating shafts connected to the wheel rims WH or rotation axes of the rear left and right wheels W2 can also use expanding and contracting structures such as a spline structure can be used. The test piece W may be placed on the support benches 31 and 32 via a free wheel hub that blocks transmission of rotation between the wheel and the rotation axis, or may be fixed in a state of floating from the road surface by a fixing mechanism FM such as a jack.

Even in the above configuration of FIG. 17, as described as above, the control device COM manifests functions as a turning angle calculator 1a that calculates the turning angle of the front left and right wheels W1, a turning radius calculator 1b that calculates the turning radius of each wheel by the turning angle, a speed difference calculator 1c that calculates the speed difference of each wheel, and a speed controller 1d that controls the speed of the pair of front wheel-side motors M1 and the pair of rear wheel-side motors M2 based on the speed difference of each wheel. Here, the speed controller 1d can individually control the speed of each of the pair of front wheel-side motors M1 and the pair of rear wheel-side motors M2.

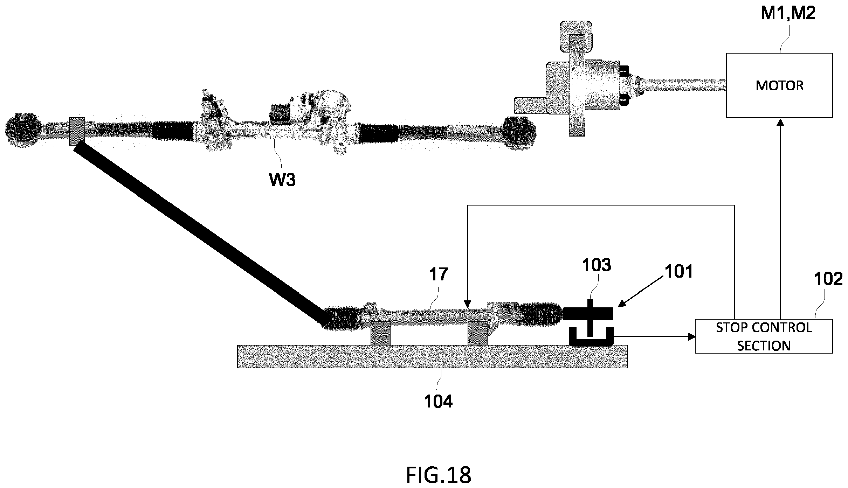

In addition to the above embodiment, in order to evaluate the steering function of the test piece W, the bench test device 100 preferably includes a steering reaction force input device 17 that inputs a steering reaction force to a steering rack gear W3 of the test piece W as illustrated in FIG. 18. When rotating at a high speed at a large steering angle in this configuration, there is concern that joints connecting the motors M1 and M2 and the wheels W1 and W2 may be damaged. In addition, the steering reaction force is directly applied in the lateral direction of the vehicle body, and there is a possibility that the position of the vehicle fixing pedestal is shifted and the test cannot be normally performed, or there is a possibility that the vehicle fixing pedestal is damaged.

Actual turning travel involves a tire slip angle, from which an actual turning radius of each wheel differs at an extremely low speed (slip angle = 0). By considering this slip angle, a more accurate inner ring difference can be calculated. Although the slip angle can be calculated using the vehicle model, a configuration in which the stability control device is suppressed by setting the slip angle as a parameter may be employed.

Therefore, as illustrated in FIG. 18, the bench test device 100 preferably further includes a detector 101 that detects that the steering angle of the steering of the test piece W has reached a predetermined steering threshold value, and a control stopping section 102 that stops rotation control of the wheels (drive wheels) or steering reaction force control of the steering reaction force input device 17 when the steering angle has reached the steering threshold value. Although FIG. 18 illustrates a configuration in which the detector 101 is integrally provided in the steering reaction force input device 17, the detector 101 may be provided separately.

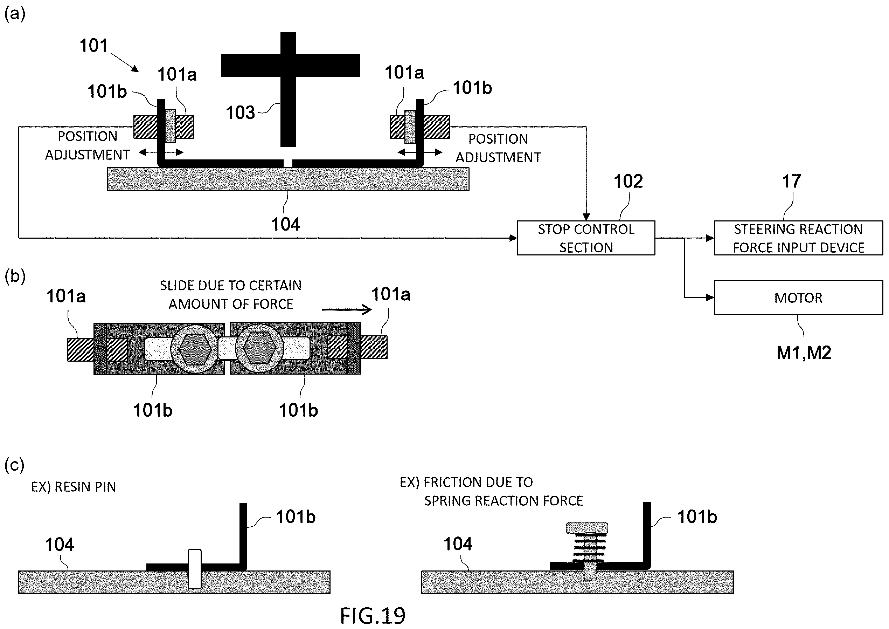

As illustrated in FIGS. 18 and 19, the detector 101 includes contact sensors 101a and support members 101b. The contact sensors 101a come into contact with the steering rack gear W3 or the interlocking member 103 interlocked with the steering rack gear W3 in a state where the steering angle has reached the steering threshold. The support members 101b support the contact sensors 101a.

The contact sensors 101a are configured to come into contact with the interlocking member 103 that interlocks with the sliding movement of the steering rack gear W3. Here, the contact sensors 101a are provided on both left and right sides of the interlocking member 103 so that it can be detected that each of the steering angle when the steering is turned to the left and the steering angle when the steering is turned to the right has reached the steering threshold (refer to FIG. 19(a)).

The support members 101b are fixed to the base member 104, and are configured such that the support members 101b slide or fall off with respect to the base member 104 according to a steering angle when the steering angle has exceeded the steering threshold (refer to FIG. 19(b)). Specifically, as illustrated in FIG. 19(c), a support member 101b may be fixed to the base member 104 by a resin pin whose fixation is released when a certain amount or more of force is applied, or may be fixed by friction generated by pressing the support member 101b against the base member 104 by a spring reaction force. Because the support member 101b slides or falls off with respect to the base member 104 in this manner, the interlocking member 103 can be prevented from coming into contact with the contact sensor 101a and generating a certain reaction force. The support member 101b is positioned on the base member 104 so that the contact sensor 101a can detect the steering threshold.

When the contact sensor 101a detects that the steering angle has reached the steering threshold, the control stopping section 102 stops at least one of the rotation control of the wheels (drive wheels) and the steering reaction force control of the steering reaction force input device 17. Note that the control stopping section 102 can be configured by a computer such as the control device COM described above.

With this configuration, it is possible to prevent breakage of the joint connecting the motor and the wheel, and to prevent positional displacement of the fixing mechanism FM and breakage of the fixing mechanism FM.

In each of the embodiments described above, in order to perform various running tests by statically or dynamically controlling the posture of the test piece W, the fixing mechanism FM may be capable of adjusting the posture of the test piece W with respect to the road surface, or may be dynamically operable to dynamically change the posture of the test piece W with respect to the road surface.

A front wheel-side motor M1 and/or a rear wheel-side motor M2 may apply a travel resistance (road load) to a drive wheel or a rotation axis of the test piece.

In the above embodiment, the interlocking rotation mechanism 5 is included, but the interlocking rotation mechanism 5 may not be included in a bench test device that performs a bench test on a four wheel-drive test piece W. Also, a general vehicle other than an ADAS vehicle or AD vehicle may be used as the test piece W. Further, a rotating body 21 has been described as a twin roller type in which the wheel W1 is supported by two rollers, but may be a single roller type in which the wheel W1 is supported by one roller.

In each of the above embodiments, a case where the drive wheels are steering wheels has been described, but it goes without saying that the present invention can also be applied to a case where the driven wheels are steering wheels. In the above embodiment, the front wheels are the drive wheels, but the rear wheels may also be the drive wheels.

In addition, various modifications and combinations of the embodiment may be made without departing from the gist of the present invention.

### Industrial Applicability

According to the present invention, it is possible to inexpensively configure a bench test device with a steering function for testing a vehicle.

### Reference Signs List

- 100: bench test device
- W: test piece
- W1: drive wheel
- W2: driven wheel
- 21: drive wheel-side rotating body
- 22: driven wheel-side rotating body
- 5: interlocking rotation mechanism
- 6: blocking section
- 5g: motor
- 31: drive wheel-side support bench
- 32: driven wheel-side support bench
- 4: movement mechanism
- 41: rolling element
- P: installation surface
- 7: centering mechanism
- 7M: recess
- 7T: protrusion
- 71: elastic body
- 72: actuator

## Claims

1. A bench test device for testing a test piece that is a vehicle or a part thereof, the bench test device comprising:
a rotating body on which a wheel of the test piece is placed;
a support bench configured to rotatably support the rotating body along with rotation of the wheel; and
a movement mechanism configured to move the support bench on an installation surface using a rotational force of the wheel.

2. The bench test device according to claim 1, wherein the movement mechanism includes a rolling element provided on the support bench, and the rolling element moves on the installation surface to move the rotating body using the rotational force of the wheel.

3. The bench test device according to claim 1 or 2, wherein the rotating body is a free roller that rotates using the rotation of the wheel as a power source.

4. The bench test device according to any one of claims 1 to 3, further comprising a centering mechanism configured to bias the support bench toward a centering position.

5. The bench test device according to claim 4 dependent to claim 2, wherein the centering mechanism includes a recess or a protrusion formed on the installation surface, and the rolling element moves along the recess or the protrusion to bias the support bench toward the centering position.

6. The bench test device according to any one of claims 1 to 5, wherein the centering mechanism includes an elastic body or an actuator which biases the support bench toward the centering position.

7. The bench test device according to any one of claims 1 to 6, wherein
the rotating body includes a drive wheel-side rotating body on which a drive wheel of the test piece is placed and a driven wheel-side rotating body on which a driven wheel of the test piece is placed, and
the bench test device further comprises an interlocking rotation mechanism configured to rotate the driven wheel-side rotating body in conjunction with the drive wheel-side rotating body.

8. The bench test device according to claim 7, wherein the interlocking rotation mechanism mechanically connects the drive wheel-side rotating body and the driven wheel-side rotating body, and transmits rotation of the drive wheel-side rotating body to the driven wheel-side rotating body.

9. The bench test device according to claim 8, wherein the interlocking rotation mechanism includes a blocking section that blocks mechanical connection between the drive wheel-side rotating body and the driven wheel-side rotating body.

10. The bench test device according to claim 7, wherein the interlocking rotation mechanism includes a motor that rotates the driven wheel-side rotating body or the driven wheel, and the motor rotates the driven wheel-side rotating body in conjunction with the drive wheel-side rotating body or rotates the driven wheel in conjunction with the drive wheel.

11. The bench test device according to any one of claims 1 to 6, wherein
the rotating body is a pair of front wheel-side rotating bodies on which front left and right wheels are respectively placed, the front left and right wheels being steering wheels of the test piece, and
the bench test device further comprises:
a pair of front wheel-side motors that respectively rotate the pair of front wheel-side rotating bodies or respectively rotate the front left and right wheels; and
a pair of rear wheel-side motors that respectively rotate a pair of rear wheel-side rotating bodies on which rear left and right wheels of the test piece are respectively placed, or respectively rotate the rear left and right wheels.

12. The bench test device according to claim 11, further comprising:
a turning angle calculator configured to calculate a turning angle of the front left and right wheels;
a turning radius calculator configured to calculate a turning radius of each wheel by the turning angle;
a speed difference calculator configured to calculate a speed difference of each wheel; and
a motor controller configured to control the pair of front wheel-side motors and the pair of rear wheel-side motors based on the speed difference of each wheel.

13. The bench test device according to any one of claims 1 to 12, further comprising:
a steering reaction force input device configured to input a steering reaction force to a steering rack gear of the test piece;
a detector configured to detect that a steering angle of steering of the test piece has reached a predetermined steering threshold; and
a control stopping section configured to stop rotation control of the wheels or steering reaction force control of the steering reaction force input device when the steering angle has reached the steering threshold.

14. The bench test device according to claim 13, wherein
the detector includes:
a contact sensor that comes into contact with a steering rack gear or an interlocking member interlocked with the steering rack gear in a state where the steering angle has reached the steering threshold; and
a support member that supports the contact sensor, and
when the steering angle exceeds the steering threshold value, the support member slides or falls off according to the steering angle.

15. A bench test device for testing a test piece that is a vehicle or a part thereof, the bench test device comprising:
a fixing mechanism configured to fix the test piece to a road surface;
a pair of front wheel-side motors connected to rotation axes of respective front left and right wheels of the test piece via a front-side rotating shaft;
a pair of rear wheel-side motors connected to rotation axes of respective rear left and right wheels of the test piece via a rear-side rotating shaft;
a turning angle calculator configured to calculate a turning angle of the front left and right wheels;
a turning radius calculator configured to calculate a turning radius of each wheel based on the turning angle;
a speed difference calculator configured to calculate a speed difference of each of the wheels; and
a motor controller configured to control the pair of front wheel-side motors or the pair of rear wheel-side motors based on the speed difference of each wheel.

16. The bench test device according to any one of claims 1 to 15, wherein the fixing mechanism is capable of adjusting an attitude of the test piece with respect to a road surface.

17. A bench test method for evaluating lane keeping, overtaking, lane changing, or emergency avoidance steering by changing a surrounding environment of a test piece, which is a vehicle or a part thereof, while setting the test piece in a traveling state on the bench test device according to any one of claims 1 to 16.
